# EUROPEAN PATENT APPLICATION

(11) **EP 3 231 700 A1**
(43) Date of publication of application: **18.10.2017**
(21) Application number: 15877991.8
(22) Date of filing: 09.12.2015
(51) Int. Cl.: B63B 1/06

(54) **SHIP**

(30) Priority: 13.01.2015 JP 2015004521
(71) Applicant: Mitsubishi Heavy Industries, Ltd., Tokyo 108-8215 (JP)
(72) Inventor: MATSUMOTO, Daisuke, Tokyo 108-8215 (JP); SUDO, Yuta, Tokyo 108-8215 (JP)
(74) Representative: Henkel, Breuer & Partner
(86) International application number: PCT/JP2015/084495
(87) International publication number: WO 2016/114040

(57) **Abstract**

A ship (1) has a Froude number of 0.25 to 0.38 and is provided with: a bow bulb (7) that is disposed below the full load waterline and of which an upper end portion is disposed on the lightest load waterline or thereabove; and a stem (8) that has a front edge portion (8a) that extends vertically upward from a front end portion (7a) of the bow bulb (7).

## Description

### [Technical Field]

The present invention relates to a ship.

Priority is claimed on Japanese Patent Application No. 2015-004521, filed January 13, 2015, the content of which is incorporated herein by reference.

### [Background Art]

In order to improve propulsion performance of a ship, there are a method of lowering hull resistance and a method of improving propulsion efficiency. In particular, reduction in hull resistance greatly contributes to an improvement in propulsion performance.

The total resistance of the ship can be classified into two large resistance components, such as frictional resistance and residuary resistance. Furthermore, the residuary resistance can be classified into wave-making resistance and viscous resistance. Techniques for improving the bow shape are known in reduction of the wave-making resistance.

As a bow shape for reducing the wave-making resistance, for example, a bulbous bow may be adopted. A bulbous bow intentionally generates a wave having a phase opposite to the wave created by the main hull. The wave generated by the bulbous bow acts in a direction of counteracting the wave generated by the main hull. Therefore, the composite bow wave height is reduced and the wave-making resistance can be reduced. However, since its effect is limited, further reduction in wave-making resistance is desired.

The residuary resistance is a resistance component obtained by subtracting the frictional resistance from total resistance, and tends to be reduced as the ratio of the length of the ship to the width of the ship increases. This is due to a decrease in viscous resistance caused by thinning of the hull due to an increase in the length of the ship, or a reduction in wave-making resistance caused by an increase in a waterline length of the ship. However, the overall length of the ship is restricted depending on conditions of quay facilities and the like. Therefore, there is a limitation in extending the waterline length of the ship.

In order to reduce the bow wave-making resistance in a ship with a Froude number of 0.18 to 0.23, Patent Literature 1 discloses a technique of extending the foremost line of the bow approximately vertically upward from the vicinity of a side slightly lower than the designed full load waterline at the designed speed to a height at a waterline surface of a portion adjacent to the water due to the swelling of the water level (upright stem), thereby sharpening the waterline level shape in that range. According to the technique described in Patent Literature 1, it is possible to reduce the swelling of the water level of the bow end at the designed speed, while eliminating the overall length restriction to secure a large hold with good transport efficiency, thereby eliminating bow wave collapse.

Patent Literature 2 illustrates a technique of reducing the Froude number by disposing a bow bulb and the front end of the ship near the full load waterline under the full load waterline at the substantially same position, thereby reducing the wave-making resistance.

### [Citation List]

### [Patent Literature]

[Patent Literature 1]
   Japanese Unexamined Patent Application, First Publication No. 2003-160090
[Patent Literature 2]
   Japanese Unexamined Patent Application, First Publication No. 2005-335670

### [Summary of Invention]

### [Technical Problem]

Incidentally, Patent Literature 1] is based on a ship having a relatively small Froude number. It is assumed that the Froude number exceeds 0.25 in a ship requiring high speed, such as a ferry in a remote island route. In this way, when the Froude number exceeds 0.25, an increase in the wave-making resistance is significant, and when the Froude number exceeds 0.38, the Froude number becomes a maximum value (hereinafter referred to as a last hump). Here, when exceeding the last hump, the wave-making resistance decreases. For example, a hydrofoil or the like sails in the region beyond the last hump. However, the above-mentioned displacement type ship does not generally exceed the last hump. Therefore, as the speed increases, the wave-making resistance rapidly increases, and the propulsion efficiency decreases.

In order to minimize the degradation of the propulsion performance due to the increase in speed without changing the overall length of the ship, it is conceivable to reduce the overall width and make it thinner, without changing the overall length of the ship. However, since the overall width decreases, there are problems in that the residential area or the cargo stacking portion become smaller, and it is difficult to secure stability characteristics.

An object of the present invention is to provide a ship in which reduction in size of the residential area or the cargo stacking portion is able to be minimized and the propulsion performance is able to be improved, without increasing the overall length of the ship (hull), when the Froude number is 0.25 to 0.38.

### [Solution to Problem]

According to a first aspect of the present invention, there is provided a ship having a Froude number of 0.25 to 0.38, the ship including: a bow bulb which is disposed below a full load waterline and has an upper end portion disposed on a lightest load waterline or higher; and a stem which has a front edge portion extending vertically upward from a front end portion of the bow bulb.

With such a configuration, it is possible to reduce the Froude number, by extending the waterline length without increasing the whole length of the ship (hull) in a water displacement type ship having a Froude number of 0.25 to 0.38. Therefore, it is possible to particularly reduce the wave-making resistance among the residuary resistances. Furthermore, since the prismatic curve can be made gentle by extension of the waterline length, the wave-making resistance can be reduced. Since the block coefficient Cb can be reduced by extension of the waterline length, the viscous resistance can be reduced. In the ship with a Froude number of 0.25 to 0.38, the course stability can be improved for a ship having a slow designed speed, that is, a ship with a relatively short waterline length. Furthermore, since the upper end portion of the bow bulb is disposed on the lightest load waterline or higher, it is possible to move the wave height position near the bow to the bow side and to minimize the wave height. Therefore, it is possible to move the anchor position further toward the bow side and to move the windlass or the like on the upper deck to the bow side accordingly. As a result, it is possible to minimize reduction of the residential area or the cargo stacking portion without increasing the whole length of the ship (hull), and to improve the propulsion performance.

According to a second aspect of the present invention, in the ship according to the first aspect, when a height of a designed full load waterline is set as H, the upper end portion in a cross section apart backward by a length which is 1% of the whole length of the hull from the bow end may be disposed at a position of 0.7H or more.

With such a configuration, the anchor can be disposed further toward the bow side. Therefore, when a windlass or the like is disposed on the bow side, the residential area or the cargo loading section can be enlarged accordingly.

According to a third aspect of the present invention, in the ship according to first or second aspect, the ship may have a block coefficient Cb of 0.6 or less.

With such a configuration, in a so-called slender type ship having a block coefficient Cb of 0.6 or less and a small draft difference, it is possible to efficiently reduce the residuary resistance, improve the propulsion performance, and improve the course stability.

According to a fourth aspect of the present invention, in the ship according to any one of the first to third aspects, the ship may have a whole length of 300 m or less.

According to a fifth aspect of the present invention, in the ship according to any one of the first to third aspects, the ship may have a whole length of 250 m or less.

According to a sixth aspect of the present invention, in the ship according to any one of the first to third aspects, the ship may have a whole length of 200 m or less.

According to a seventh aspect of the present invention, in the ship according to any one of the first to third aspects, the ship may have a whole length of 150 m or less.

According to an eighth aspect of the present invention, in the ship according to any one of the first to third aspects, the ship may have a whole length of 120 m or less.

According to a ninth aspect of the present invention, in the ship according to any one of the first to third aspects, the ship may have a whole length of 100 m or less.

According to a tenth aspect of the present invention, in the ship according to any one of the first to third aspects, the ship may have a whole length of 80 m or less.

According to an eleventh aspect of the present invention, the ship according to any one of the first to tenth aspects may be a passenger ship having a block coefficient Cb of 0.6 or less.

According to a twelfth aspect of the present invention, the ship according to any one of the first to tenth aspects may be may be a cargo ship having a block coefficient Cb of 0.6 or less.

### [Advantageous Effects of Invention]

According to the ship, when the Froude number is 0.25 to 0.38, it is possible to suppress the reduction in the residential area or the cargo stacking portion and to improve the propulsion performance, without increasing the whole length of the hull.

### [Brief Description of Drawings]

Fig. 1 is a side view illustrating a whole configuration of a ship according to an embodiment of the present invention.
Fig. 2 is an enlarged view of the vicinity of a bow of the ship in Fig. 1.
Fig. 3 is a cross-sectional view taken along a line III-III in Fig. 2 (a cross-sectional line apart backward by a length which is 1% of the whole length of the hull from the bow end).
Fig. 4 is a cross-sectional view taken along a line IV-IV of Fig. 2.
Fig. 5 is a side view corresponding to Fig. 1 of the ship in a first comparative example.
Fig. 6 is a graph in which a vertical axis represents a prismatic coefficient (Cp) which is the ratio of a transverse sectional area at an arbitrary position in a bow-stern direction with respect to a central cross-sectional area of the hull, and a horizontal axis represents an arbitrary position in the bow-stern direction.
Fig. 7 is a graph in which a vertical axis represents the wave-making resistance coefficient (Cw) and a horizontal axis represents the Froude number (Fn).
Fig. 8 is an enlarged graph of a portion surrounded by an alternate long and two short dashes line in Fig. 7.
Fig. 9 is a graph in which a vertical axis represents a residuary resistance coefficient (Cr) and a horizontal axis represents the Froude number (Fn).
Fig. 10 is an enlarged graph of a portion surrounded by an alternate long and two short dashes line in Fig. 9.
Fig. 11 is a graph in which a vertical axis represents BHP (Brake Horse Power) and a horizontal axis represents the Froude number (Fn).
Fig. 12 is an enlarged graph of a portion surrounded by a two-dot chain line in Fig. 11.
Fig. 13 is a graph in which a vertical axis represents a wave height and a horizontal axis represents the ratio (x/Lpp) of the position x in the bow-stern direction to the distance Lpp between the front perpendicular line and the rear perpendicular line.
Fig. 14 is a cross-sectional view corresponding to Fig. 3 of a ship in a second comparative example.

### [Description of Embodiments]

Next, a ship according to an embodiment of the present invention will be described with reference to the drawings.

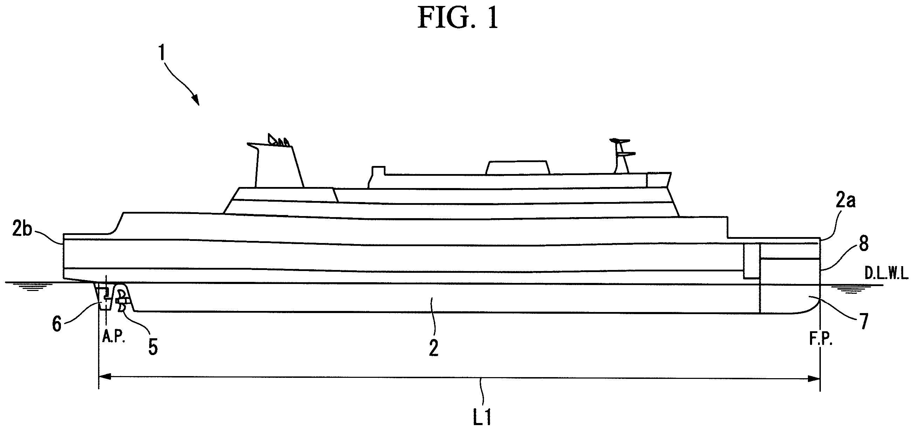

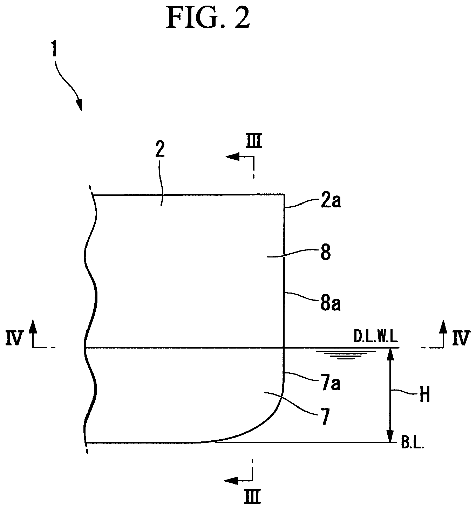

Fig. 1 is a side view illustrating the whole configuration of a ship according to an embodiment of the present invention. Fig. 2 is an enlarged view of the vicinity of the bow of the ship in Fig. 1.

A ship 1 of this embodiment is a relatively fast ship having a Froude number of about 0.25 to 0.38. The ship 1 is, for example, a passenger ship, a ferry that can carry vehicles, a passenger ship such as a cargo-passenger ship capable of carrying cargo, a RORO ship (Roll-on/Roll-off ship), a container ship, and a dry cargo ship such as an automobile carrying ship. A "passenger ship" may include a "survey ship" that conducts oceanographic surveys. A passenger ship or a cargo ship is classified as a relatively slender type ship with a block coefficient Cb of 0.6 or less.

As illustrated in Fig. 1, a hull 2 of the ship 1 is provided with a propeller 5 and a rudder 6 on a side close to a stem 2b. The propeller 5 is driven by a main engine (not illustrated) provided in the hull 2. The propeller 5 generates a propulsive force which propels the ship 1. The rudder 6 is provided behind the propeller 5. The rudder 6 controls the traveling direction of the hull 2. The propeller 5 and the rudder 6 are not limited thereto. The propeller 5 and the rudder 6 may be devices which can obtain similar propulsion and steering effects, for example, propulsion devices made up of an azimuth propeller, a pod propeller, an azimuth propeller and a propeller, and a pod propeller and a propeller or the like.

As illustrated in Figs. 1 and 2, a bulbous bow (bow bulb) 7 and a stem 8 are formed on the bow 2a of the hull 2.

The bulbous bow 7 intentionally generates a wave having a phase opposite to that of a wave created by the hull 2 when the ship 1 sails. The wave created by the bulbous bow 7 acts in a direction to cancel out the wave created by the hull 2. Therefore, a composite bow wave height is reduced and the wave-making resistance is reduced. Fig. 1 illustrates a case where the hull 2 has sunk to the designed full load waterline (D.L.W.L). In Fig. 1, "F.P." represents a front perpendicular line of the hull 2, and "A.P." represents a rear perpendicular line of the hull 2. In the case of Fig. 1, the waterline length L1 is the length from the position, which is slightly closer to the stem 2b than the rear perpendicular line (A.P.), to the front perpendicular line (F.P.).

The stem 8 forms a tip portion of the bow 2a. The stem 8 has a front edge portion 8a extending vertically upward from a front end portion 7a of the bulbous bow 7. In other words, the front edge portion 8a of the stem 8 is formed to be disposed on the front perpendicular line F.P. The front edge portion 8a is formed to extend upward from the wave formed by at least due to the bow 2a.

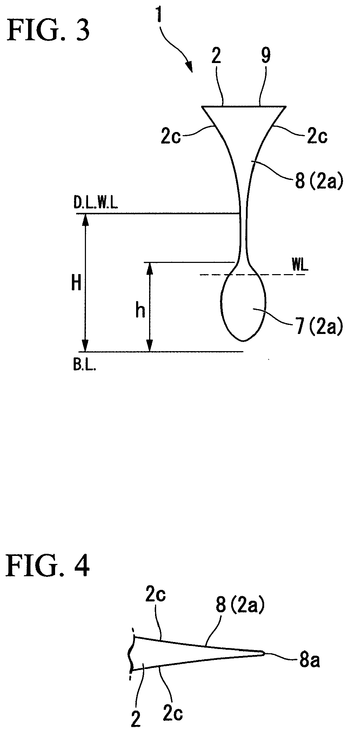

Fig. 3 is a cross-sectional view taken along the line III-III of Fig. 2 (section line apart by a length which is 1% of the whole length of the hull from the bow end). Fig. 4 is a cross-sectional view taken along the line IV-IV of Fig. 2.

As illustrated in Figs. 3 and 4, the stem 8 includes a pair of broadsides 2c, and an upper deck 9. The stem 8 is formed such that the pair of broadsides 2c approach each other toward the front edge portion 8a. In other words, a waterline surface shape of the stem 8 has a sharp form so that the width of the hull 2 decreases toward the front edge portion 8a. As illustrated in Fig. 4, the broadsides 2c constituting the stem 8 are concavely curved surfaces that are slightly curved in the bow-stern direction. As illustrated in Fig. 3, the pair of broadsides 2c constituting the stem 8 are formed in a substantially parallel form just above the bulbous bow 7. The pair of broadsides 2c is formed into concavely curved surfaces which separate from each other as going upward direction.

The upper portions of the pair of broadsides 2c are connected by the upper deck 9. On the upper deck 9, for example, a mooring device such as a windlass for anchoring and anchor-handling an anchor (not illustrated) is disposed. The anchor is disposed on the side closer to the stem than the wave height position of the wave made by the bow 2a in the bow-stern direction in order to avoid contact with the wave made by the bow 2a.

As illustrated in Figs. 2 and 3, when the height from the ship bottom position B.L to the designed full load waterline (D.L.W.L) in the up-down direction is set as H, a height position h of the above-mentioned upper end of the bulbous bow 7 from the ship bottom position B.L in the up-down direction is 0.7H or more (h ≥ 0.7H). The cross section of the bulbous bow 7 illustrated in Fig. 3 is formed in a circular shape elongated in the longitudinal direction. For example, the upper end of the bulbous bow 7 is in a place at which the distance between the pair of broadsides 2c forming the upper part of the bulbous bow 7 illustrated in Fig. 3 is the smallest and at which the pair of broadsides 2c is the closest to the ship bottom position B.L. The height of the upper end of the bulbous bow 7 is disposed to be equal to or higher than the lightest load waterline WL. The lightest load waterline WL is determined by the requirements of damage stability. The height of the lightest load waterline WL of the ship 1 in the embodiment is equal to or higher than 70% of the height of the designed full load waterline.

In other words, in a slender type ship with a small draft difference such as a ferry and a RORO ship, considering the bow subsidence or the swelling of the bow wave at the time of cruising, the bulbous bow 7 can be submerged in all loaded states from a full load to a light load state.

Next, the operation of the ship 1 of the aforementioned embodiment will be described.

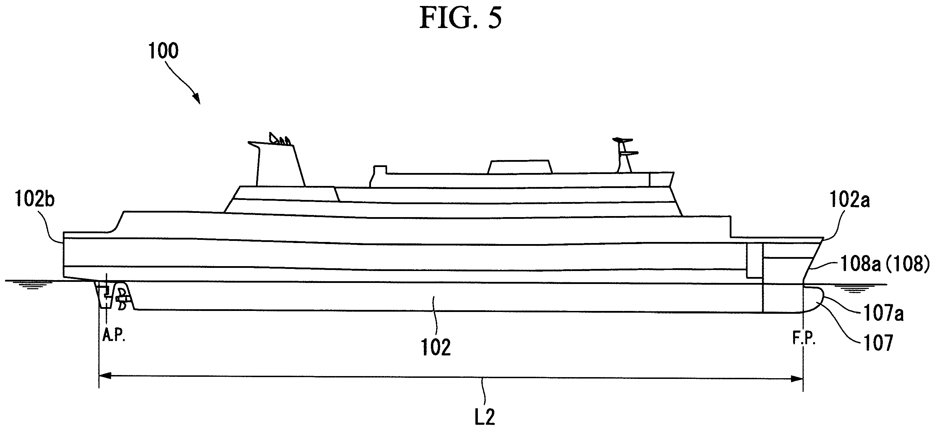

Fig. 5 is a side view corresponding to Fig. 1 of the ship in the first comparative example.

As illustrated in Fig. 5, a ship 100 has a front edge portion 108a of a stem 108 which is formed to be inclined from a side closer to a stern 102b than a front end portion 107a of a bulbous bow 107 toward a front end portion of a bow 102a. As a result, the ship 100 of the first comparative example illustrated in Fig. 5 has a bow shape of a general ship. That is, since the ship 1 in this embodiment has the front edge portion 8a extending vertically upward from the front end portion 7a of the bulbous bow 7, the waterline length L1 of the ship 1 can be made longer than that of the waterline length L2 of the ship 100 of the first comparative example.

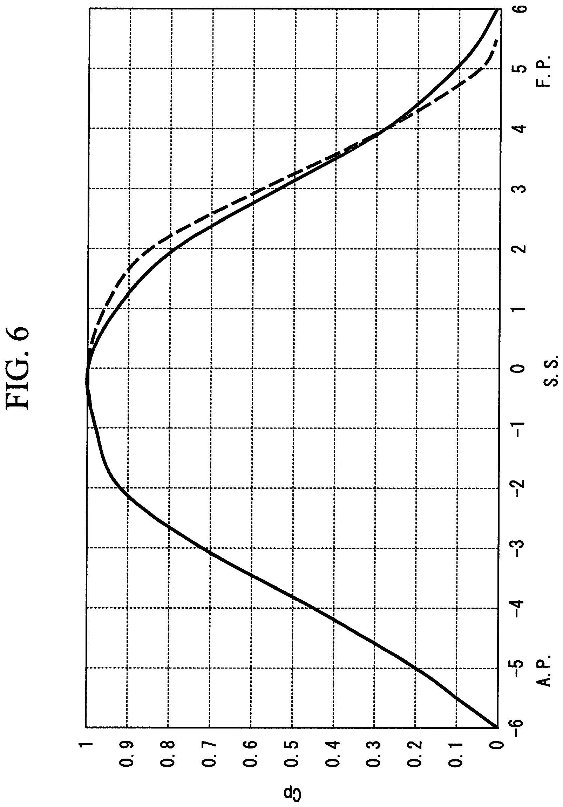

Fig. 6 is a graph in which a vertical axis represents a prismatic coefficient (Cp) which is the ratio of a transverse sectional area at an arbitrary position in a bow-stern direction with respect to a central cross-sectional area of the hull, and a horizontal axis represents an arbitrary position in the bow-stern direction. 1 S.S represents a perpendicular length Lpp × 0.1 which is a distance between the front perpendicular line (F.P.) and the rear waterline (A.P.), "0" represents the center of the hull, "5" represents the front perpendicular line (F.P.), and "- 5" represents the rear perpendicular line (A.P.). In Fig. 6, a solid line is a graph illustrating an example of change in the prismatic curve of the hull 2 in this embodiment. A broken line is a graph illustrating an example of change in the prismatic curve in the hull 102 of the first comparative example.

As illustrated in Fig. 6, in the hull 2 of the above-described embodiment, the inclination of the prismatic curve on the side of the bow 2a is gentler than in the first comparative example, according to the length of the waterline extending to the side of the bow 2a. This is because, when the width of the hull 2 and the amount of drainage is constant, it is possible to reduce the ratio of the transverse cross-sectional area at the bow side of the center portion to the transverse cross-sectional area at the center portion in the blow-stern direction of the hull 2. As a result, it is possible to reduce the wave made in a portion referred to as a so-called shoulder portion of the hull 2. It is possible to make the hull 2 relatively thin, while keeping the width of the hull 2 and the amount of drainage constant. Therefore, the viscous resistance can be reduced.

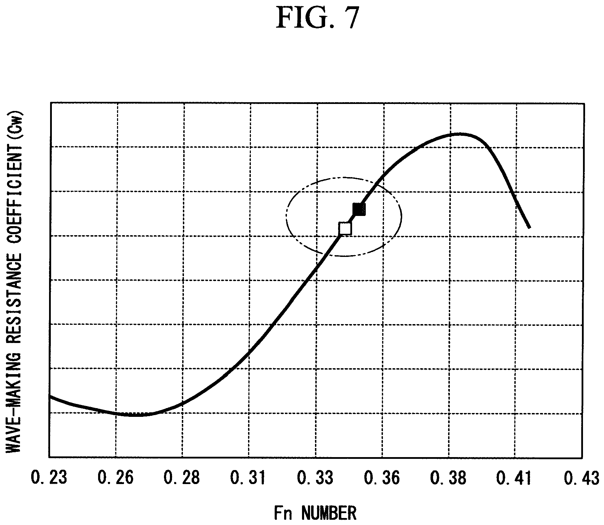

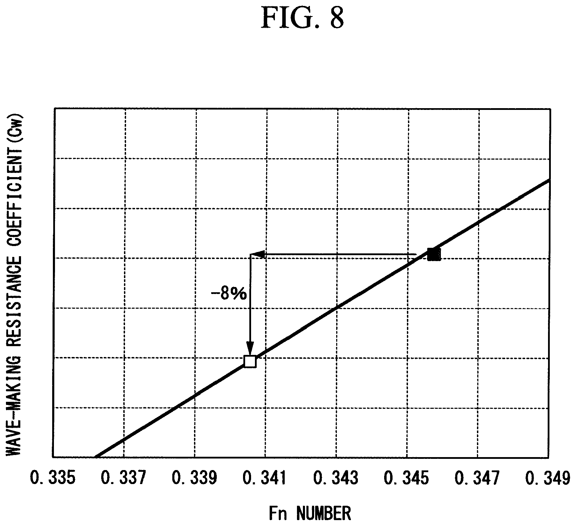

Fig. 7 is a graph in which a vertical axis represents the wave-making resistance coefficient (Cw) and a horizontal axis represents the Froude number (Fn). Fig. 8 is an enlarged graph of a portion surrounded by an alternate long and two short dashes line in Fig. 7. In the graphs, a points indicated by a solid square is a first comparative example, and a point indicated by an outlined square illustrates the case of the ship 1 of the above-described embodiment (the same applies to Figs. 8 to 12). Here, if "Vs" is set as a designed speed, "g" is set as the gravitational acceleration, and "L" is set as a length of the waterline in the designed full load waterline, the Froude number Fn is represented by Fn = (Vs/(gL)^0.5). In other words, when the designed speed Vs is constant, as the waterline length L becomes longer, the Froude number becomes smaller.

As illustrated in Fig. 7, as the Froude number increases, the wave-making resistance coefficient increases in the region in which the Froude number is higher than 0.25, especially, in which the Froude number is higher than 0.28. As the Froude number increases from 0.25, the rate of increase of the wave-making resistance coefficient gradually increases, and the wave-making resistance coefficient becomes constant around the Froude number of 0.32. The rate of increase of the wave-making resistance coefficient gradually decreases from the vicinity in which the Froude number exceeds 0.35. The wave-making resistance coefficient becomes a maximum value when the Froude number exceeds 0.38, and thereafter, the wave-making resistance coefficient declines. The increase and decrease in the wave-making resistance coefficient is referred to as a so-called last hump.

The region, in which the rate of increase of the wave-making resistance with a Froude number of 0.25 to 0.35 which is a target for the ship 1 of this embodiment is positive, is a region in which the wave-making resistance coefficient increases due to the last hump. In this region, the wave-making resistance coefficient greatly changes with slight increase or decrease in the Froude number. The length of the designed full load waterline of the ship 1 in this embodiment is, for example, 100 m, and can be lengthened by about 4 m, for example, with respect to the length of the waterline of the ship 100 in the first comparative example.

As illustrated in Fig. 8, the Froude number of the ship 1 in this embodiment is a value between 0.340 and 0.341. The Froude number of the ship 100 in the first comparative example is a value between 0.345 and 0.346. That is, the Froude number of the ship 1] in this embodiment is a value that is smaller than the Froude number of the first comparative example by 0.008. The difference in the Froude numbers is due to the difference in the waterline length. The difference between each of the Froude numbers of the embodiment and the first comparative example is slight, but due to the difference in Froude number, the wave-making resistance coefficient of the ship in the embodiment is reduced by about 8% as compared to that for the ship 100 of the first comparative example.

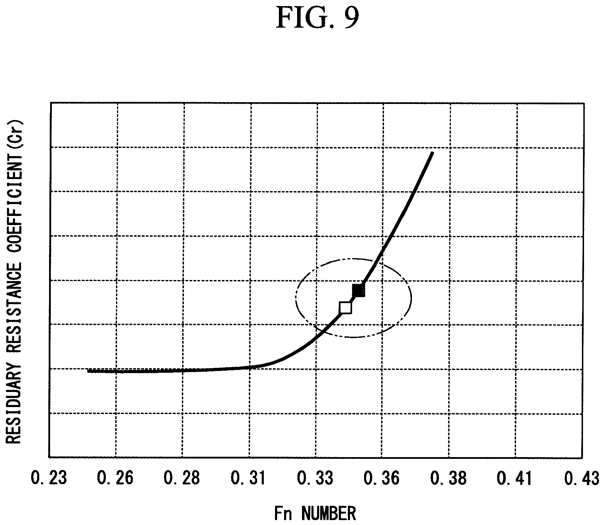

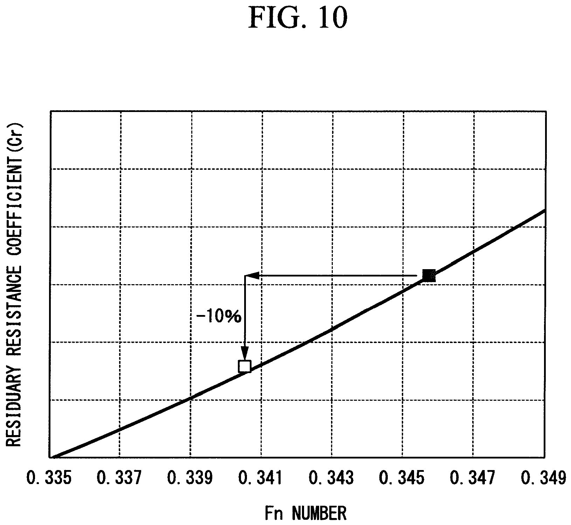

Fig. 9 is a graph in which the vertical axis represents the residuary resistance coefficient (Cr) and the horizontal axis represents the Froude number (Fn). Fig. 10 is an enlarged graph of a portion surrounded by an alternate long and two short dashes line in Fig. 9.

As illustrated in Fig. 9, the residuary resistance coefficient representing the magnitude of the residuary resistance obtained by subtracting the frictional resistance from the total resistance increases from the vicinity of the Froude number of 0.31 with increase in the Froude number. More specifically, the rate of increase in the residuary resistance coefficient gradually increases as the Froude number increases.

In Fig. 10, the Froude number of the ship 1 in this embodiment and the Froude number of the ship 100 in the first comparative example are the same as those in Fig. 8. The Froude number of the ship 1 in this embodiment is a value that is smaller than the Froude number of the first comparative example by 0.008. As a result, the residuary resistance coefficient is reduced by 10%.

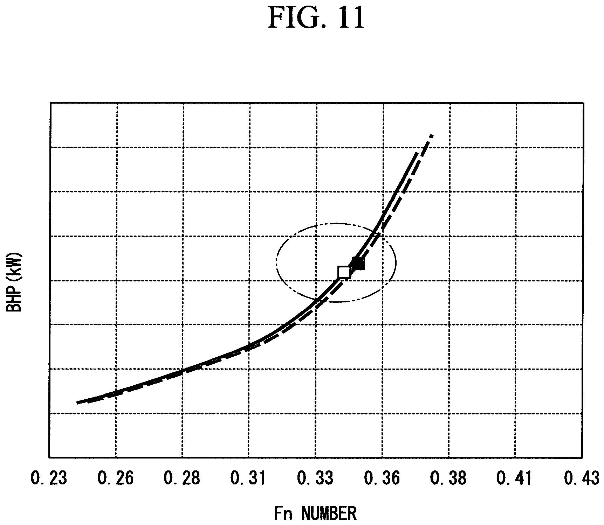

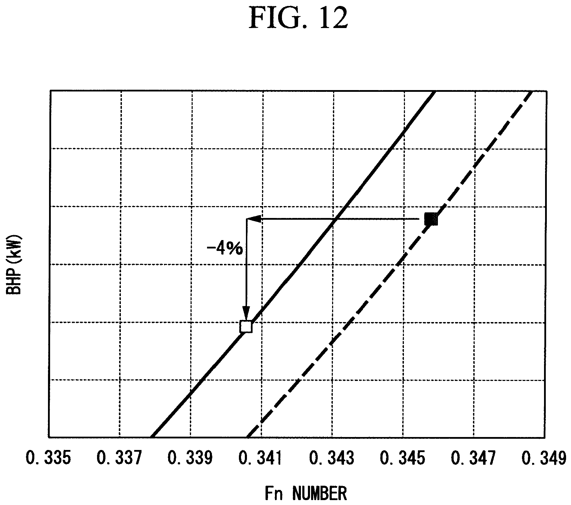

Fig. 1] is a graph in which the vertical axis represents BHP (Brake Horse Power) (kW) and the horizontal axis represents the Froude number (Fn). Fig. 12 is an enlarged graph of a portion surrounded by an alternate long and two short dashes line in Fig. 11. In Figs. 11 and 12, the solid line represents the BHP of the ship 1 in this embodiment, and the broken line represents the BHP of the ship 100 in the first comparative example. BHP is the braking horsepower, which is the horsepower that can be taken out of the main engine.

As illustrated in Fig. 11, the BHP increases with an increase in the Froude number. The rate of increase of the BHP gradually increases with increase in the Froude number. Here, the BHP of the ship 1] in this embodiment and the BHP of the ship 100 in the first comparative example are different curves. This is because, in short, the residuary resistance is different between the ship 1 and the ship 100.

In Figs. 11 and 12, the Froude number of the ship 1 in this embodiment and the Froude number of the ship 100 in the first comparative example are all the same as those in Fig. 8. The Froude number of the ship 1 in this embodiment is a value that is smaller than the Froude number of the first comparative example by 0.008. As a result, when the length of the waterline becomes longer, the required BHP at the same speed is reduced by 4%.

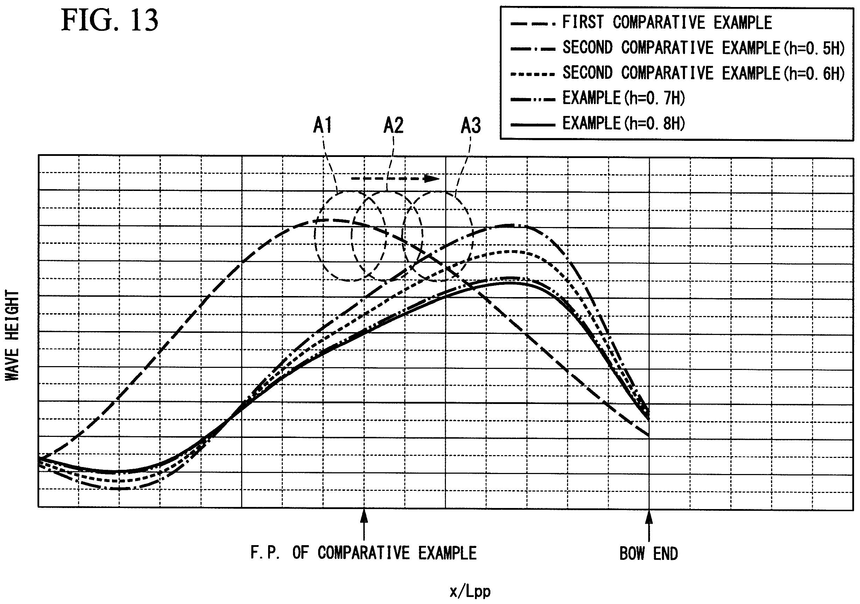

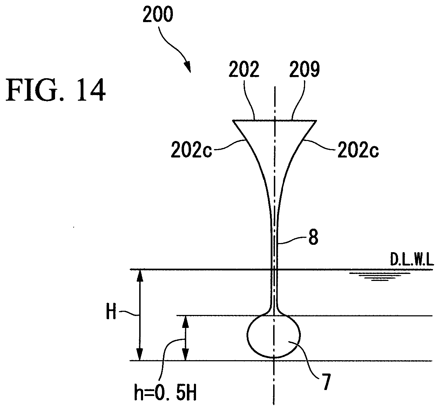

Fig. 13 is a graph in which a vertical axis represents a wave height and a horizontal axis represents a ratio (x/Lpp) of a position x in the bow-stern direction to an inter-perpendicular length Lpp as a distance between the front perpendicular line (F.P.) and the rear perpendicular line (A.P.). That is, on the horizontal axis, going toward the right side is approaching the tip portion of the bow 2a. The wave height on the vertical axis is the wave height of the wave made by the bow. In Fig. 13, the long dash line (long broken line) represents the wave height in the first comparative example having the aforementioned stem 108. An alternate dash and dot line and a short dash line (short broken line) represent the wave height in a ship 200 (see Fig. 14) of the second comparative example. The ship 200 of the second comparative example differs from the ship 1 of this embodiment only in the position of the upper end of the bulbous bow. More specifically, in this second comparative example, the height position h of the upper end of the bulbous bow 207 is set to 0.5H (alternate dash and dot line) and 0.6H (alternate long and two short dashes line).

Fig. 14 is a cross-sectional view corresponding to Fig. 3 of the ship in the second comparative example. Fig. 14 illustrates a case of h = 0.5H. The hull 202 of the ship 200 of the second comparative example includes a pair of broadsides 202c, an upper deck 209, and a bulbous bow 7, respectively. The height position h of the upper end of the bulbous bow 7 in the ship 200 of the second comparative example is set to 0.5H, which is half of the height position H of the designed full load waterline (D.L.W.L).

The alternate long and two short dashes line and the solid line in Fig. 13 represent the wave heights of the ship 1 in the example of this embodiment. That is, the height position h of the upper end of the bulbous bow 7 is set to 0.7H (alternate long and two short dashes line) and 0.8H (solid line).

As the height position h of the upper end of the bulbous bow 7 increases in this way, the upper end of the bulbous bow 7 approaches closer to the designed full load waterline (D.L.W.L).

As illustrated in Fig. 13, first, in the case of the ship 100 of the first comparative example, the wave height of wave made by the bow is the highest, and the position with the highest wave height is a position farthest from the bow (bow end). The anchor in the ship 100 needs to be provided on the stem side of the position with the highest wave height. Therefore, the front end position of the residential area or the cargo stacking portion is restricted by a windlass or the like provided on the upper deck 109.

By forming the front edge portion 8a (not illustrated in Fig. 14) of the stem 8 to extend vertically upward from the front end portion 7a (not illustrated in Fig. 14) of the bulbous bow 7, as in the ship 200 of the second comparative example or the ship 1 of the embodiment, it is possible to move the position with the highest wave height of wave made by the bow to the bow 2a side. It is possible to move the anchor from the position A1 to the position A2 toward the bow side by the amount of movement of the position with the highest wave height to the bow 2a side. Therefore, the position of a mooring device such as a windlass or the like can also be moved toward the bow side, and it is possible to enlarge the residential area or the cargo stacking portion at the front end position to the bow side, as compared to the ship 100 of the aforementioned first comparative example.

In the embodiment of the present invention, h is set to be 0.7H or more. This makes it possible to further reduce the wave height of wave made by the bow 2a. Therefore, it is possible to move the anchor from the position A2 to the position A3 further toward the bow side, and to move the position of a mooring device such as a windlass or the like further to the bow 2a side. As a result, it is possible to further enlarge the front end position of the residential area or the cargo stacking portion to the bow 2a side, as compared to the ship 200 of the aforementioned second comparative example.

In ferries, RORO ships, etc., when h is exceeded h = 0.8H, there is a case where the bulbous bow 7 exits above the water level during cruising. Therefore, the height position h of the upper end of the bulbous bow 7 may be set below the designed full load waterline (D.L. W.L) and may be set to about 0.8H so that the wave-making resistance is not enlarged by the bulbous bow 7.

The table shown below illustrates an amount of decrease in Froude number depending on the length of the ship (hull) in the example of the present invention. This table illustrates a case of intervals of 50 m from 300 m to 150 m. Also, this table illustrates a case of 120 m, 100 m, and 80 m below 150 m.

**[Table 1]**

| Length of ship | Fn = 0.25 | Fn = 0.38 | Speed 25 kn | Extension of waterline length by 5 m | Difference |
|---|---|---|---|---|---|
| | Speed corresponding to | | Fn number | Fn number when extending | Amount of decrease in Fn number |
| 300 m | 26.4 kn | 40.1 kn | 0.2371 | 0.2351 | -0.0020 |
| 250 m | 24.1 kn | 36.6 kn | 0.2597 | 0.2571 | -0.0026 |
| 200 m | 21.5 kn | 32.7 kn | 0.2904 | 0.2868 | -0.0036 |
| 150 m | 18.6 kn | 28.3 kn | 0.3353 | 0.3298 | -0.0055 |
| 120 m | 16.7 kn | 25.3 kn | 0.3748 | 0.3673 | -0.0076 |
| 100 m | 15,2 kn | 23.1 kn | 0.4106 | 0.4007 | -0.0099 |
| 80 m | 13.6 kn | 20.7 kn | 0.4591 | 0.4454 | -0.0137 |

As illustrated in this table, in a case where the speed of the ship is assumed to be constant at 25 kn with a length of the ship of 300 m, when the length of the waterline is assumed to have been extended by 5 meters, by adopting the stem 8 of the aforementioned embodiment for the first comparative example (the Fn number at the speed of 25 kn = 0.2371), the Fn number becomes "0.2351", and the amount of decrease in the Fn number is "0.0020."

In a case where the speed of the ship is assumed to be constant at 25 kn with a length of the ship of 150 m, when the length of the waterline is assumed to have been extended by 5 meters, by adopting the stem 8 of the aforementioned embodiment for the first comparative example (the Fn number at the speed of 25 kn = 0.3353), the amount of decrease in the Fn number is "0.0055."

In a case where the speed of the ship is assumed to be constant at 25 kn with a length of the ship of 80 m, when the length of the waterline is assumed to have been extended by 5 meters, by adopting the stem 8 of the aforementioned embodiment for the first comparative example (the Fn number at the speed of 25 kn = 0.4591), the amount of decrease in the Fn number is "0.0137."

That is, in the case of a constant speed, as the length of the ship decreases, the Fn number rises. Therefore, by adopting the stem 8 of the above-described embodiment, the effect of reducing the Fn number at the time of extension of the waterline length is enhanced.

According to the aforementioned embodiment, it is possible to reduce the Froude number, by extending the waterline length L1 without increasing the whole length of the hull 2 in a water displacement type ship having a Froude number of 0.25 to 0.38. Therefore, it is possible to particularly reduce the wave-making resistance among the residuary resistances. Furthermore, since the prismatic curve can be made gentle by extension of the waterline length L1, the wave-making resistance can be reduced.

Furthermore, since the waterline length L1 can be extended, the block coefficient Cb can be reduced, and thus, the viscous resistance can be reduced. Furthermore, in the ship 1 with a Froude number of 0.25 to 0.38, the course stability can be improved for a ship having a slow designed speed, that is, a ship with a relatively short waterline length. Furthermore, since the upper end portion of the bulbous bow 7 can be disposed on the lightest load waterline (W.L) or higher, it is possible to move the wave height position near the bow 2a to the bow 2a side and to minimize the wave height. Therefore, it is possible to move the anchor position further toward the bow 2a side and to move the windlass or the like on the upper deck 9 to the bow 2a side accordingly. As a result, it is possible to suppress the reduction of the residential area or the cargo stacking portion without increasing the whole length of the ship (hull), and to improve the propulsion performance.

Further, by setting the height position h of the upper end of the bulbous bow 7 to 0.7H or higher, the anchor can be disposed further close to the bow 2a side. Therefore, it is possible to dispose the windlass or the like on the bow 2a side, and it is possible to enlarge the residential area or the cargo stacking portion accordingly. Furthermore, it is possible to always submerge the bulbous bow 7 in all loaded states. Therefore, it is possible to effectively obtain the effect of reducing the wave-making resistance due to the bulbous bow 7. Furthermore, it is not necessary to increase the cross-sectional area of the bulbous bow 7 more than necessary. Therefore, it is possible to minimize deterioration of the propulsion performance at the time of low speed cruising.

Furthermore, it is possible to efficiently reduce the residuary resistance, improve the course stability, and improve the propulsion performance in a so-called slender type ship with a small draft difference having a block coefficient Cb of 0.6 or less.

The present invention is not limited to the aforementioned embodiments, and includes various modifications to the aforementioned embodiment within the scope that does not depart from the gist of the present invention. That is, the specific shapes, configurations, and the like described in the embodiments are merely examples and can be appropriately changed.

For example, in each of the aforementioned embodiments, a ferry, a RORO ship or the like is exemplified, but the invention is not limited thereto. For example, the present invention is applicable as long as a ship is a slender type having a small draft difference and having a Froude number of about 0.25 to 0.38.

### [Industrial Applicability]

The invention can be applied to a ship. According to the ship, when the Froude number is 0.25 to 0.38, it is possible to suppress the reduction of the residential area or the cargo stacking portion and to improve the propulsion performance, without increasing the whole length of the hull.

### [Reference Signs List]

1 Ship
2 Hull
2b Stem
2a Bow
5 Propeller
6 Rudder
7 Bulbous bow (bow bulb)
7a Front end portion
8 Stem
8a Front edge portion
9 Upper deck

## Claims

1. A ship having a Froude number of 0.25 to 0.38, the ship comprising:
a bow bulb which is disposed below a full load waterline and has an upper end portion disposed on a lightest load waterline or higher; and
a stem which has a front edge portion extending vertically upward from a front end portion of the bow bulb.

2. The ship according to claim 1, wherein, when a height of a designed full load waterline is set as H, the upper end portion in a cross section apart backward by a length which is 1% of the whole length of the hull from the bow end is disposed at a position of 0.7H or more.

3. The ship according to claim 1 or 2, wherein a block coefficient Cb is 0.6 or less.

4. The ship according to any one of claims 1 to 3, wherein the hull has a whole length of 300 m or less.

5. The ship according to any one of claims 1 to 3, wherein the hull has a whole length of 250 m or less.

6. The ship according to any one of claims 1 to 3, wherein the hull has a whole length of 200 m or less.

7. The ship according to any one of claims 1 to 3, wherein the hull has a whole length of 150 m or less.

8. The ship according to any one of claims 1 to 3, wherein the hull has a whole length of 120 m or less.

9. The ship according to any one of claims 1 to 3, wherein the hull has a whole length of 100 m or less.

10. The ship according to any one of claims 1 to 3, wherein the hull has a whole length of 80 m or less.

11. The ship according to any one of claims 1 to 10, wherein the ship is a passenger ship having a block coefficient Cb of 0.6 or less.

12. The ship according to any one of claims 1 to 10, wherein the ship is a cargo ship having a block coefficient Cb of 0.6 or less.

## Amended claims

### Amended claims under Art. 19.1 PCT

**1.** (Amended) A ship having a Froude number of 0.25 to 0.38, the ship comprising:
a bow bulb which is disposed below a full load waterline and has an upper end portion disposed on a lightest load waterline or higher; and
a stem which has a front edge portion extending vertically upward from a front end portion of the bow bulb, wherein
when a height of a designed full load waterline is set as H, the upper end portion in a cross section apart backward by a length which is 1% of the whole length of the hull from the bow end is disposed at a position of 0.7H or more.

**2.** Cancelled)

**3.** (Amended) The ship according to claim 1, wherein a block coefficient Cb is 0.6 or less.

**4.** (Amended) The ship according to claim 1 or 3, wherein the hull has a whole length of 300 m or less.

**5.** (Amended) The ship according to claim 1 or 3, wherein the hull has a whole length of 250 m or less.

**6.** (Amended) The ship according to claim 1 or 3, wherein the hull has a whole length of 200 m or less.

**7.** (Amended) The ship according to claim 1 or 3, wherein the hull has a whole length of 150 m or less.

**8.** (Amended) The ship according to claim 1 or 3, wherein the hull has a whole length of 120 m or less.

**9.** (Amended) The ship according to claim 1 or 3, wherein the hull has a whole length of 100 m or less.

**10.** (Amended) The ship according to claims 1 or 3, wherein the hull has a whole length of 80 m or less.

**11.** (Amended) The ship according to claims 1, 3 to 10, wherein the ship is a passenger ship having a block coefficient Cb of 0.6 or less.

**12.** (Amended) The ship according to any one of claims 1, 3 to 10, wherein the ship is a cargo ship having a block coefficient Cb of 0.6 or less.

Statement under Art. 19.1 PCT
In claim 1, the description of "when a height of a designed full load waterline is set as H, the upper end portion in a cross section in a rear part of 1% of the whole length of the hull from the bow end is disposed at a position of 0.7H or more" was added.

This description is based on claim 2 at the beginning of the application.

In claim 3, by the cancellation of claim 2, correction was made so that the only dependent claim was claim 1.

In claims 4 to 10, by the cancellation of claim 2, correction was made so that claim 1 or 3 was a dependent claim.

In claims 11 and 12, by the cancellation of claim 2, correction was made so that dependent claim was one of claim 1, and 3 to 10.

Therefore, this correction is not an addition of new matter.
